# EUROPEAN PATENT APPLICATION

(11) **EP 2 879 388 A1**
(43) Date of publication of application: **03.06.2015**
(21) Application number: 14194121.1
(22) Date of filing: 20.11.2014
(51) Int. Cl.: H04N 9/31, H04N 21/258

(54) **Information processing apparatus , image projecting apparatus, and method for providing distortion correction instruction**

(30) Priority: 21.11.2013 JP 2013241376
(71) Applicant: Ricoh Company, Ltd., Tokyo 143-8555 (JP)
(72) Inventor: NAGAO, Masafumi, Ohta-ku, Tokyo 143-8555 (JP)
(74) Representative: Maury, Richard Philip

(57) **Abstract**

An information processing apparatus (10) comprises a confirming unit (15) that makes a confirmation request asking whether or not an image projecting apparatus (30, 130) has a distortion correction function to previously correct distortion of a projection image due to projection, to the image projecting apparatus (30, 130); an instructing unit (17) that issues to the image projecting apparatus (30, 130) a distortion correction instruction to perform distortion correction on the projection image and project the projection image, when the image projecting apparatus (30, 130) has the distortion correction function; and a transmitting unit (19) that transmits the projection image to the image projecting apparatus (30, 130).

## Description

### CROSS-REFERENCE TO RELATED APPLICATIONS

The present application claims priority to and incorporates by reference the entire contents of Japanese Patent Application No. 2013-241376 filed in Japan on November 21, 2013.

### BACKGROUND OF THE INVENTION

### 1. Field of the Invention

The present invention relates to an information processing apparatus, an image projecting apparatus, and a method for providing a distortion correction instruction.

### 2. Description of the Related Art

Image projecting apparatuses such as projectors project projection images onto a projection surface such as a screen. When distortion occurs in the projection surface, distortion occurs also in the projection images projected onto the projection surface.

On this account, the following distortion correction technique has been known. The distortion of a projection image due to projection is previously corrected by an image projecting apparatus or by an information processing apparatus such as a smartphone or a tablet terminal from which the projection image is transmitted to the image projecting apparatus (see Japanese Laid-open Patent Publication No. 2009-206800 and Japanese Laid-open Patent Publication No. 2013-065277, for example).

The following describes this distortion correction technique. An image projecting apparatus projects a pattern image onto a projection surface, and an image capturing apparatus such as a camera included in the image projecting apparatus or in an information processing apparatus captures the pattern image projected onto the projection surface. The image projecting apparatus or the information processing apparatus performs distortion correction on a projection image by using correction parameters based on the pattern image and the captured image, with the distortion of the projection surface taken into consideration. The thus distortion-corrected projection image is projected onto the distorted projection surface. This can reduce the distortion of the projection image projected on the projection surface.

When capturing a pattern image, an image projecting apparatus is usually fixed at a certain position (in front of a projection surface, for example) whereas when capturing a pattern image, an information processing apparatus is usually held in a user's hand at a certain position. Thus, the distortion correction of projection images by the information processing apparatus is prone to cause displacements of captured images due to shakes during image capturing, which reduces the accuracy of the distortion correction.

Furthermore, when an information processing apparatus performs distortion correction on projection images, even in the use of the same image projecting apparatus, distortion correction parameters need to be obtained (calibration needs to be performed) whenever such an information processing apparatus switches with another information processing apparatus. This is troublesome.

On this account, in the case where an information processing apparatus and an image projecting apparatus each include a distortion correction function, it is preferable that the image projecting apparatus perform distortion correction.

In view of the above-mentioned conventional problems, there is a need to provide an information processing apparatus, an image projecting apparatus, and a method for providing a distortion correction instruction that allow the image projecting apparatus to perform distortion correction when the image projecting apparatus has a distortion correction function.

### SUMMARY OF THE INVENTION

It is an object of the present invention to at least partially solve the problems in the conventional technology.

According to the present invention, there is provided an information processing apparatus comprising: a confirming unit that makes a confirmation request asking whether or not an image projecting apparatus has a distortion correction function to previously correct distortion of a projection image due to projection, to the image projecting apparatus; an instructing unit that issues to the image projecting apparatus a distortion correction instruction to perform distortion correction on the projection image and project the projection image, when the image projecting apparatus has the distortion correction function; and a transmitting unit that transmits the projection image to the image projecting apparatus.

The present invention also provides an image projecting apparatus comprising: an accepting unit that accepts a confirmation request asking whether or not the image projecting apparatus has a distortion correction function to previously correct distortion of a projection image due to projection, from an information processing apparatus; and a responding unit that sends back a response indicating presence of the distortion correction function when the image projecting apparatus has the distortion correction function, and sends back a response indicating absence of the distortion correction function when the image projecting apparatus does not have the distortion correction function.

The present invention also provides a method for providing a distortion correction instruction, the method comprising: making a confirmation request asking whether or not an image projecting apparatus has a distortion correction function to previously correct distortion of a projection image due to projection, to the image projecting apparatus; issuing to the image projecting apparatus a distortion correction instruction to perform the distortion correction on the projection image and to project the projection image, when the image projecting apparatus has the distortion correction function; and transmitting the projection image to the image projecting apparatus.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a block diagram of a configuration example of an image projecting system of a first embodiment of the present invention;
FIG. 2 is a sequence diagram of an example of a process performed in the image projecting system of the first embodiment;
FIG. 3 is a block diagram of a configuration example of an image projecting system of a second embodiment of the present invention;
FIG. 4 is a sequence diagram of an example of a process performed in the image projecting system of the second embodiment;
FIG. 5 is a flowchart of an example of a process performed by a smartphone (an information processing apparatus) of a modification of the first embodiment;
FIG. 6 is a diagram of a hardware configuration example of a smartphone (an information processing apparatus) of each of the embodiments; and
FIG. 7 is a diagram of a hardware configuration example of a projector (an image projecting apparatus) of each of the embodiments.

### DETAILED DESCRIPTION OF THE PREFERRED EMBODIMENTS

Embodiments of an information processing apparatus, an image projecting apparatus, an image projecting system, a method for providing a distortion correction instruction, and a computer program according to the present invention will be described in detail with reference to the accompanying drawings. The following describes examples in which the information processing apparatus is a smartphone and the image projecting apparatus is a projector, but these are not limiting examples. The information processing apparatus may be, for example, a tablet terminal.

### First Embodiment

The first embodiment describes an example in which a projector has a distortion correction function to previously correct distortion of a projection image due to projection.

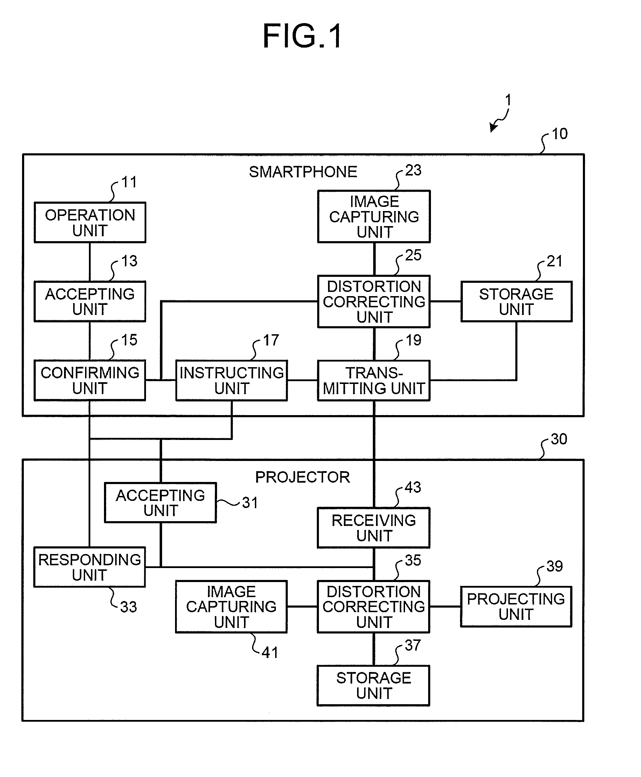

FIG. 1 is a block diagram of a configuration example of an image projecting system 1 of the first embodiment. As FIG. 1 illustrates, the image projecting system 1 includes a smartphone 10 and a projector 30.

The smartphone 10 and the projector 30 may be connected via a network such as a local area network (LAN) or the Internet or via any of various cables such as a video cable. The network may be wired or wireless. Examples of the video cable include a D-subminiature (D-Sub) cable and a High-Definition Multimedia Interface (HDMI (registered trademark)) cable.

As FIG. 1 illustrates, the smartphone 10 includes an operation unit 11, an accepting unit 13, a confirming unit 15, an instructing unit 17, a transmitting unit 19, a storage unit 21, an image capturing unit 23, and a distortion correcting unit 25.

The operation unit 11 can be implemented by, for example, an input device such as a touch screen. The accepting unit 13, the confirming unit 15, the instructing unit 17, the transmitting unit 19, and the distortion correcting unit 25 can be implemented, for example, by causing a processing unit such as a central processing unit (CPU) to execute a computer program, in other words, by software. The storage unit 21 can be implemented by, for example, at least one of storage devices capable of magnetically, optically, or electrically storing data, such as a hard disk drive (HDD), a solid state drive (SSD), a memory card, an optical disk, and a random access memory (RAM). The image capturing unit 23 can be implemented by, for example, an image capturing device such as a camera.

In the first embodiment, the projector 30 has the distortion correction function and performs distortion correction, and thus, a description about the distortion correction function of the smartphone 10 is omitted.

In response to a user operation, the operation unit 11 inputs an execution instruction for distortion correction.

The accepting unit 13 accepts the input of the execution instruction for distortion correction from the operation unit 11.

The confirming unit 15 makes a confirmation request asking whether or not the projector 30 has a distortion correction function, to the projector 30. Specifically, after the accepting unit 13 has accepted the execution instruction for distortion correction, the confirming unit 15 makes a confirmation request and confirms whether or not the projector 30 has a distortion correction function from the response from the projector 30. Because the projector 30 has the distortion correction function in the first embodiment, the confirming unit 15 confirms that the projector 30 has the distortion correction function.

When the projector 30 has the distortion correction function, the instructing unit 17 issues a distortion correction instruction to perform distortion correction on a projection image and to project the projection image, to the projector 30. If the projector 30 provides a notification about completion of distortion correction preparation, the instructing unit 17 may cause a display unit (not illustrated) such as a touch screen to notify that the projector 30 performs distortion correction.

The transmitting unit 19 transmits the projection image to the projector 30. The transmitting unit 19 transmits an image displayed on a display unit (not illustrated) to the projector 30 as the projection image, for example. The projection image may be either a still image or a moving image.

Descriptions of the storage unit 21, the image capturing unit 23, and the distortion correcting unit 25 are omitted in the first embodiment because they are related to the distortion correction function of the smartphone 10.

As FIG. 1 illustrates, the projector 30 includes an accepting unit 31, a responding unit 33, a distortion correcting unit 35, a storage unit 37, a projecting unit 39, an image capturing unit 41, and a receiving unit 43.

The accepting unit 31, the responding unit 33, the distortion correcting unit 35, and the receiving unit 43 may be implemented, for example, by causing a processing unit such as a CPU to execute a computer program, in other words, by software, or by hardware such as an integrated circuit (IC), or by a combined use of software and hardware. The storage unit 37 can be implemented by, for example, at least one of storage devices capable of magnetically, optically, or electrically storing data, such as an HDD, an SSD, a memory card, an optical disk, and an RAM. The projecting unit 39 can be implemented by, for example, an optical system for projection such as a projection lens. The image capturing unit 41 can be implemented by, for example, an image capturing device such as a camera.

The accepting unit 31 accepts the confirmation request asking whether or not the projector has a distortion correction function, from the smartphone 10. Because the projector 30 has the distortion correction function in the first embodiment, the accepting unit 31 further accepts the distortion correction instruction from the smartphone 10.

If the projector has the distortion correction function, the responding unit 33 sends back a response indicating the presence of the distortion correction function. If the projector has no distortion correction function, the responding unit 33 sends back a response indicating the absence of the distortion correction function. Because the projector 30 has the distortion correction function in the first embodiment, the responding unit 33 sends back a response indicating the presence of the distortion correction function. The presence or absence of the distortion correction function may be determined by the presence or absence of the distortion correcting unit 35, or may be defined in software (a computer program) implementing the responding unit 33.

When the accepting unit 31 accepts the distortion correction instruction, the distortion correcting unit 35 performs distortion correction on the projection image transmitted from the smartphone 10.

Specifically, the distortion correcting unit 35 reads a pattern image stored in the storage unit 37 and causes the projecting unit 39 to project the pattern image. The projecting unit 39 thus projects the pattern image onto a projection surface such as a screen. The pattern image is an image with a given pattern.

The distortion correcting unit 35 causes the image capturing unit 41 to capture the pattern image projected on the projection surface. The image capturing unit 41 thus captures the pattern image projected on the projection surface and obtains a captured image.

The distortion correcting unit 35 then compares the pattern image read from the storage unit 37 with the captured image captured by the image capturing unit 41 and creates distortion correction parameters. The distortion correcting unit 35 performs distortion correction on the projection image received by the receiving unit 43 to be described later by using the distortion correction parameters and causes the projecting unit 39 to project the projection image. The projecting unit 39 thus projects the projection image subjected to the distortion correction onto the projection surface. After the distortion correction parameters have been created, the distortion correcting unit 35 may cause the responding unit 33 to notify the smartphone 10 of the completion of distortion correction preparation.

The receiving unit 43 receives the projection image from the smartphone 10.

In the description of the first embodiment, image processing performed on a projection image is specialized in distortion correction, but the image processing performed on a projection image is not limited to this. Other image processing such as scaling may also be performed on a projection image.

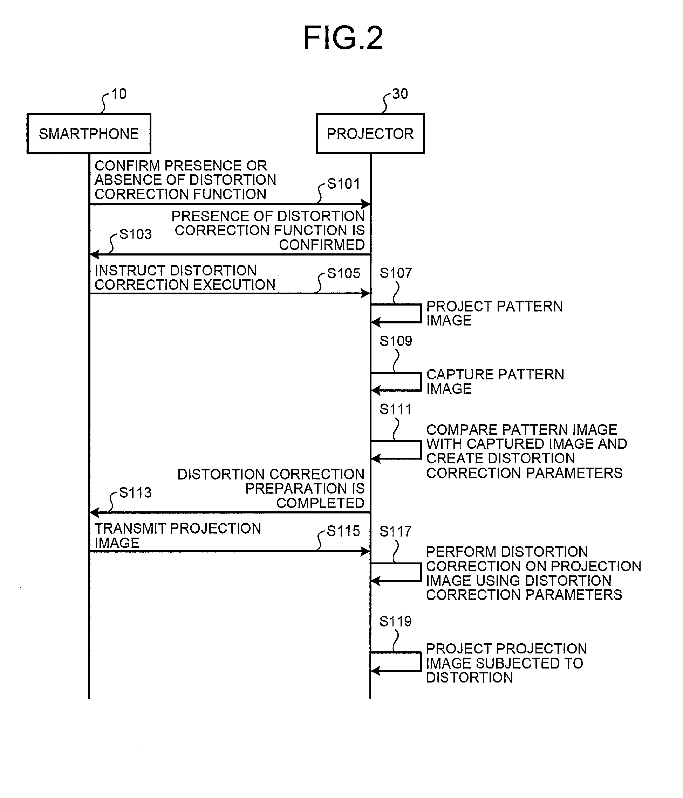

FIG. 2 is a sequence diagram of an example of a process performed in the image projecting system 1 of the first embodiment.

When the accepting unit 13 of the smartphone 10 accepts the input of an execution instruction for distortion correction from the operation unit 11, the confirming unit 15 of the smartphone 10 makes a confirmation request asking whether or not the projector 30 has a distortion correction function, to the projector 30 (Step S101).

When the accepting unit 31 of the projector 30 accepts, from the smartphone 10, the confirmation request asking whether or not the projector 30 has a distortion correction function, the responding unit 33 of the projector 30 sends back a response indicating the presence of the distortion correction function (Step S103).

The instructing unit 17 of the smartphone 10 then issues a distortion correction instruction to perform distortion correction on a projection image and project the projection image, to the projector 30 (Step S105).

When the accepting unit 31 of the projector 30 accepts the distortion correction instruction from the smartphone 10, the distortion correcting unit 35 of the projector 30 reads a pattern image stored in the storage unit 37 and causes the projecting unit 39 to project the pattern image (Step S107).

Subsequently, the distortion correcting unit 35 causes the image capturing unit 41 to capture the pattern image projected on the projection surface (Step S109).

The distortion correcting unit 35 then compares the pattern image read from the storage unit 37 with the captured image captured by the image capturing unit 41 and creates distortion correction parameters (Step S111). The distortion correcting unit 35 notifies the smartphone 10 of the completion of distortion correction preparation (Step S113).

Subsequently, the transmitting unit 19 of the smartphone 10 transmits a projection image to the projector 30 (Step S115).

When the receiving unit 43 of the projector 30 receives the projection image from the smartphone 10, the distortion correcting unit 35 performs distortion correction on the projection image received by the receiving unit 43, by using the distortion correction parameters (Step S117) and causes the projecting unit 39 to project the projection image (Step S119).

According to the first embodiment, as just described, the smartphone confirms whether the projector has a distortion correction function. This allows the projector to perform distortion correction when having the distortion correction function.

According to the first embodiment, particularly, when the smartphone receives an execution instruction for distortion correction, the smartphone confirms whether or not the projector has a distortion correction function. This allows the projector to perform distortion correction so long as the projector has the distortion correction function, even if a user has tried to perform distortion correction on the smartphone by not knowing that the projector has the distortion correction function.

Therefore, according to the first embodiment, distortion correction can be performed automatically by the distortion correction function of the projector side, which is excellent in accuracy and saving time and effort.

### Second Embodiment

The second embodiment describes an example in which a projector has no distortion correction function to previously correct distortion of a projection image due to projection. The following mainly describes differences from the first embodiment. The components having the same functions as in the first embodiment are represented with same names and symbols as in the first embodiment, and the descriptions thereof will be omitted.

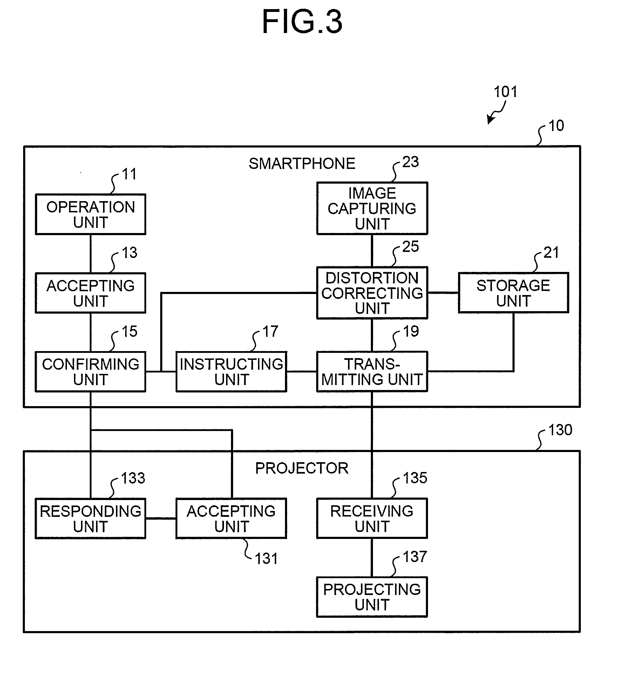

FIG. 3 is a block diagram of a configuration example of an image projecting system 101 of the second embodiment. As FIG. 3 illustrates, the image projecting system 101 includes the smartphone 10 and a projector 130.

In the second embodiment, the projector 130 has no distortion correction function and the smartphone 10 performs distortion correction. Thus, as for the smartphone 10, the distortion correction function of the smartphone 10 will be mainly described.

Because the projector 130 has no distortion correction function in the second embodiment, the confirming unit 15 confirms that the projector 130 has no distortion correction function. The confirming unit 15 may cause a display unit (not illustrated) to notify that the smartphone 10 performs distortion correction.

When the projector 130 has no distortion correction function, the distortion correcting unit 25 performs distortion correction on a projection image.

Specifically, the distortion correcting unit 25 reads a pattern image stored in the storage unit 21 and causes the transmitting unit 19 to transmit the pattern image. The transmitting unit 19 thus transmits the pattern image to the projector 130, and the projector 130 projects the pattern image onto a projection surface.

The distortion correcting unit 25 causes the image capturing unit 23 to capture the pattern image projected on the projection surface. The image capturing unit 23 thus captures the pattern image projected on the projection surface and produces a captured image.

The distortion correcting unit 25 then compares the pattern image read from the storage unit 21 with the captured image captured by the image capturing unit 23 and creates distortion correction parameters. The distortion correcting unit 25 performs distortion correction on the projection image by using the distortion correction parameters and causes the transmitting unit 19 to transmit the projection image. The transmitting unit 19 thus transmits the projection image subjected to the distortion correction, to the projector 130.

As FIG. 3 illustrates, the projector 130 includes an accepting unit 131, a responding unit 133, a receiving unit 135, and a projecting unit 137.

The accepting unit 131, the responding unit 133, and the receiving unit 135 are implemented, for example, by causing a processing unit such as a CPU to execute a computer program, in other words, by software. The projecting unit 137 can be implemented by, for example, an optical system for projection such as a projection lens.

The accepting unit 131 accepts a confirmation request asking whether or not the projector has a distortion correction function, from the smartphone 10.

If the projector has the distortion correction function, the responding unit 133 sends back a response indicating the presence of the distortion correction function. If the projector has no distortion correction function, the responding unit 133 sends back a response indicating the absence of the distortion correction function. Because the projector 130 has no distortion correction function in the second embodiment, the responding unit 133 sends back a response indicating the absence of the distortion correction function. The presence or absence of the distortion correction function may be determined by the presence or absence of a distortion correcting unit, or may be defined in software (computer program) implementing the responding unit 133.

The receiving unit 135 receives the pattern image and the projection image subjected to the distortion correction, from the smartphone 10.

The projecting unit 137 projects the pattern image received by the receiving unit 135 onto a projection surface and projects the projection image subjected to the distortion correction and received by the receiving unit 135, onto the projection surface.

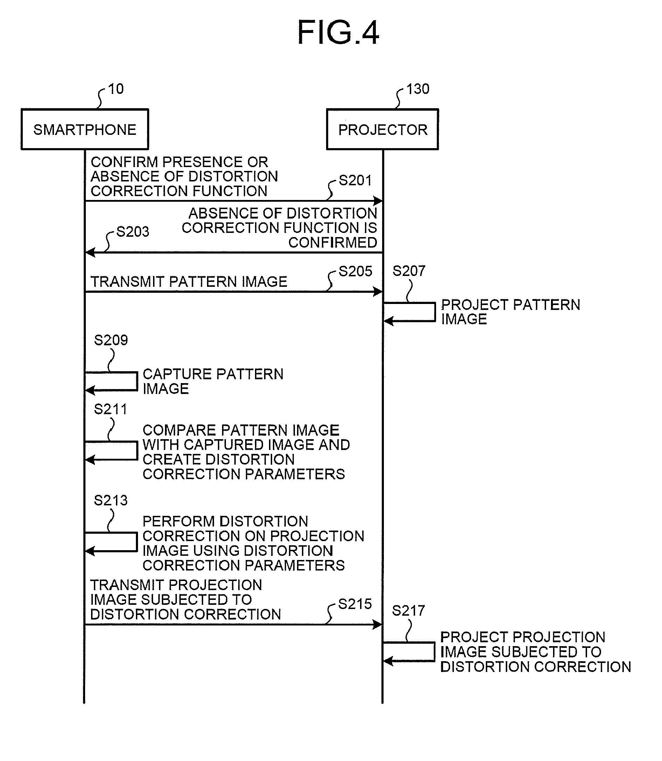

FIG. 4 is a sequence diagram of an example of a process performed in the image projecting system 101 of the second embodiment.

When the accepting unit 13 of the smartphone 10 accepts the input of an execution instruction for distortion correction from the operation unit 11, the confirming unit 15 of the smartphone 10 makes a confirmation request asking whether or not the projector 130 has a distortion correction function, to the projector 130 (Step S201).

When the accepting unit 131 of the projector 130 accepts, from the smartphone 10, the confirmation request asking whether or not the projector 130 has a distortion correction function, the responding unit 133 of the projector 130 sends back a response indicating the absence of the distortion correction function (Step S203).

Subsequently, the distortion correcting unit 25 of the smartphone 10 reads a pattern image stored in the storage unit 21 and causes the transmitting unit 19 to transmit the pattern image (Step S205).

After the receiving unit 135 of the projector 130 has received the pattern image from the smartphone 10, the projecting unit 137 of the projector 130 projects the pattern image received by the receiving unit 135 onto the projection surface (Step S207).

Subsequently, the distortion correcting unit 25 causes the image capturing unit 23 to capture the pattern image projected on the projection surface (Step S209).

The distortion correcting unit 25 then compares the pattern image read from the storage unit 21 with the captured image captured by the image capturing unit 23 and creates distortion correction parameters (Step S211). The distortion correcting unit 25 performs distortion correction on the projection image by using the distortion correction parameters (Step S213) and causes the transmitting unit 19 to transmit the projection image (Step S215).

After the receiving unit 135 of the projector 130 has received the projection image subjected to the distortion correction, from the smartphone 10, the projecting unit 137 of the projector 130 projects the projection image subjected to the distortion correction and received by the receiving unit 135, onto the projection surface (Step S217).

### Modification

In the first embodiment, when the instructing unit 17 has already issued a distortion correction instruction to the projector 30, issuance of the distortion correction instruction may be omitted.

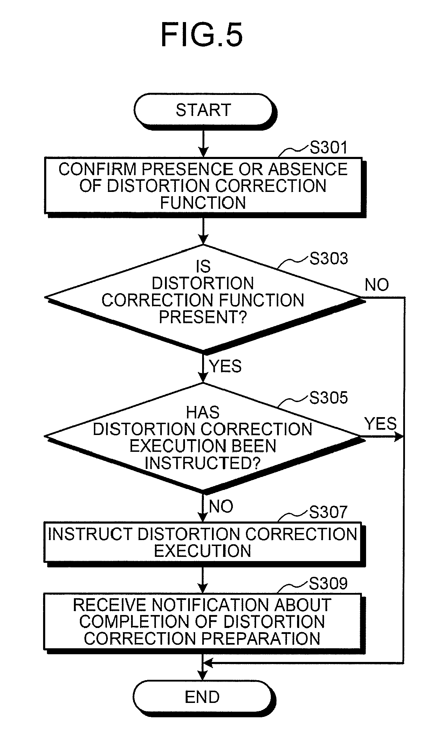

FIG. 5 is a flowchart of an example of a process performed by the smartphone 10 of the modification.

The confirming unit 15 makes a confirmation request asking whether or not the projector 30 has a distortion correction function, to the projector 30 (Step S301).

If the projector 30 has no distortion correction function (No at Step S303), the smartphone 10 performs distortion correction as described in the second embodiment.

If the projector 30 has the distortion correction function (Yes at Step S303), the instructing unit 17 confirms whether or not the projector 30 has already received a distortion correction instruction (Step S305).

For example, when once the instructing unit 17 has issued a distortion correction instruction after the startup of the power source of the projector 30, it is determined that the distortion correction instruction has already been issued. Alternatively, for example, when once the instructing unit 17 has issued a distortion correction instruction at the current position of the projector 30, it may be determined that the distortion correction instruction has already been issued. The current position of the projector 30 may be determined by, for example, the values measured by an acceleration sensor (not illustrated).

If no distortion correction instruction has been issued to the projector 30 (No at Step S305), the instructing unit 17 issues a distortion correction instruction to the projector 30 (Step S307) and is notified of the completion of distortion correction preparation by the projector 30 (Step S309).

If a distortion correction instruction has already been issued to the projector 30 (Yes at Step S305), the instructing unit 17 issues no additional distortion correction instruction to the projector 30 and the transmitting unit 19 transmits a projection image to the projector 30.

In this modification, for example, in the case where the smartphone 10 is changed to another smartphone or to a tablet terminal and the projector 30 projects a projection image, the projector 30 has already completed the distortion correction preparation. This can omit extra calibration and cut the time required until the start of projection.

### Hardware Configuration

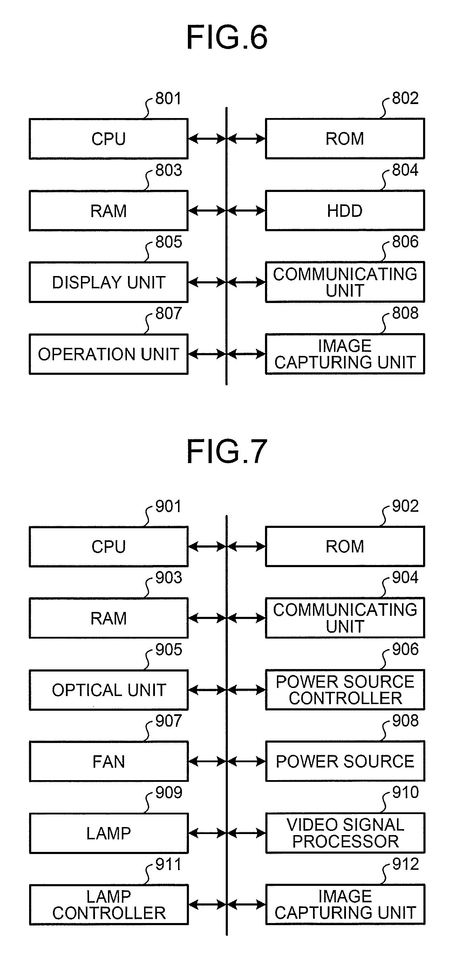

FIG. 6 is a diagram of a hardware configuration example of a smartphone of each of the embodiments. The smartphone in each embodiment includes a CPU 801, a read-only memory (ROM) 802, an RAM 803, an HDD 804, a display unit 805, a communicating unit 806, an operation unit 807, and an image capturing unit 808. The smartphone has a hardware configuration utilizing a typical computer.

The CPU 801 executes a computer program to control the operation of the smartphone. The ROM 802 stores therein computer programs executed by the CPU 801 and data necessary for execution of the computer programs. The RAM 803 provides, for example, a work area for the CPU 801. The HDD 804 stores therein, for example, data and files as sources of projection images. The display unit 805 is, for example, a touch screen. The communicating unit 806 is, for example, a network interface card (NIC). The operation unit 807 is, for example, a touch screen. The image capturing unit 808 is, for example, a camera.

Computer programs executed by the smartphone of each of the embodiments and the modification are provided by being stored in a computer-readable storage medium such as a compact disc read-only memory (CD-ROM), a compact disc recordable (CD-R), a memory card, a digital versatile disc (DVD), and a flexible disk (FD), in an installable or executable file format.

Computer programs executed by the smartphone of each embodiment and modification may also be provided by being stored in a computer connected to a network such as the Internet and being downloaded via the network. Computer programs executed by the smartphone of each embodiment and modification may also be provided or distributed via a network such as the Internet. Furthermore, computer programs executed by the smartphone of each embodiment and modification may be provided by being previously incorporated in the ROM 802 or the like.

Computer programs executed by the smartphone of each embodiment and modification have modules that implement each of the components mentioned above in a computer. As actual hardware, the CPU 801 reads such a computer program from the ROM 802 onto the RAM 803 and executes it, whereby each component is implemented in a computer.

FIG. 7 is a diagram of a hardware configuration example of a projector of each of the embodiments. The projector in each embodiment includes a CPU 901, an ROM 902, an RAM 903, a communicating unit 904, an optical unit 905, a power source controller 906, a fan 907, a power source 908, a lamp 909, a video signal processor 910, a lamp controller 911, and an image capturing unit 912. The projector has a hardware configuration utilizing a typical computer.

The CPU 901 executes a computer program to control the operation of the projector. The ROM 902 stores therein computer programs executed by the CPU 901 and data necessary for execution of the computer programs. The RAM 903 provides, for example, a work area for the CPU 901. The communicating unit 904 is, for example, a NIC. The optical unit 905 is a part where videos (images) are created, and examples thereof include a digital micromirror device (DMD) and a color wheel, in the case of a digital light processing (DLP) projector. The power source controller 906 controls the power source 908. The fan 907 cools the projector. The power source 908 supplies power to the projector. The lamp 909 serves as a light source. The video signal processor 910 processes video signals (image signals). The lamp controller 911 is a ballast that controls the lamp.

The image capturing unit 912 is, for example, a camera.

Computer programs executed by the projector of each of the embodiments and the modification are provided by being stored in a computer-readable storage medium such as a CD-ROM, a CD-R, a memory card, a DVD, and an FD, in an installable or executable file format.

Computer programs executed by the projector of each embodiment and modification may also be provided by being stored in a computer connected to a network such as the Internet and being downloaded via the network. Computer programs executed by the projector of each embodiment and modification may also be provided or distributed via a network such as the Internet. Furthermore, computer programs executed by the projector of each embodiment and modification may be provided by being previously incorporated in the ROM or the like.

Computer programs executed by the projector of each embodiment and modification have modules that implement each of the components mentioned above in a computer. As actual hardware, the CPU 901 reads such a computer program from the ROM 902 onto the RAM 903 and executes it, whereby each component is implemented in a computer.

The embodiments according to the present invention exert an effect of causing an image projecting apparatus to perform distortion correction when the image projecting apparatus has a distortion correction function.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. An information processing apparatus (10) comprising:
a confirming unit (15) that makes a confirmation request asking whether or not an image projecting apparatus (30, 130) has a distortion correction function to previously correct distortion of a projection image due to projection, to the image projecting apparatus (30, 130);
an instructing unit (17) that issues to the image projecting apparatus (30, 130) a distortion correction instruction to perform distortion correction on the projection image and project the projection image, when the image projecting apparatus (30, 130) has the distortion correction function; and
a transmitting unit (19) that transmits the projection image to the image projecting apparatus (30, 130).

2. The information processing apparatus (10) according to claim 1, further comprising an accepting unit (13) that accepts an execution instruction for the distortion correction, wherein
when the accepting unit (13) accepts the execution instruction, the confirming unit (15) makes the confirmation request.

3. The information processing apparatus (10) according to claim 1 or 2, wherein
the instructing unit (17) omits the distortion correction instruction when the instructing unit (17) has already issued the distortion correction instruction to the image projecting apparatus (30, 130).

4. The information processing apparatus (10) according to any one of claims 1 to 3, further comprising a distortion correcting unit (25) that performs the distortion correction on the projection image (30, 130) when the image projecting apparatus (30, 130) does not have the distortion correction function, wherein
the transmitting unit (19) transmits the projection image subjected to the distortion correction, to the image projecting apparatus (30, 130).

5. The information processing apparatus (10) according to claim 4, wherein
the transmitting unit (19) transmits a pattern image to the image projecting apparatus (30, 130),
the information processing apparatus (10) further comprises an image capturing unit (23) that captures the pattern image projected by the image projecting apparatus (30, 130), and
the distortion correcting unit (25) compares the pattern image with a captured image captured by the image capturing unit (23), creates a distortion correction parameter, and performs the distortion correction on the projection image by using the distortion correction parameter.

6. An image projecting apparatus (30, 130) comprising:
an accepting unit (31) that accepts a confirmation request asking whether or not the image projecting apparatus (30, 130) has a distortion correction function to previously correct distortion of a projection image due to projection, from an information processing apparatus (10); and
a responding unit (33) that sends back a response indicating presence of the distortion correction function when the image projecting apparatus (30, 130) has the distortion correction function, and sends back a response indicating absence of the distortion correction function when the image projecting apparatus (30, 130) does not have the distortion correction function.

7. The image projecting apparatus (30, 130) according to claim 6, wherein
in the presence of the distortion correction function, the accepting unit (31) further accepts a distortion correction instruction to perform distortion correction on the projection image, from the information processing apparatus (10), and
the image projecting apparatus (30, 130) further comprises
a distortion correcting unit (35) that performs the distortion correction on the projection image transmitted from the information processing apparatus (10) when the accepting unit (31) accepts the distortion correction instruction, and
a projecting unit (39) that projects the projection image subjected to the distortion correction.

8. The image projecting apparatus (30, 130) according to claim 7, wherein
the projecting unit (39) projects a pattern image,
the image projecting apparatus (30, 130) further comprises an image capturing unit (41) that captures the projected pattern image, and
the distortion correcting unit (35) compares the pattern image with a captured image captured by the image capturing unit (41), creates a distortion correction parameter, and performs the distortion correction on the projection image by using the distortion correction parameter.

9. The image projecting apparatus (30, 130) according to claim 6, further comprising, in the absence of the distortion correction function, a projecting unit (39) that projects the projection image that has been subjected to the distortion correction and has been transmitted from the information processing apparatus (10).

10. A method for providing a distortion correction instruction, the method comprising:
making a confirmation request asking whether or not an image projecting apparatus (30, 130) has a distortion correction function to previously correct distortion of a projection image due to projection, to the image projecting apparatus (30, 130);
issuing to the image projecting apparatus (30, 130) a distortion correction instruction to perform the distortion correction on the projection image and to project the projection image, when the image projecting apparatus (30, 130) has the distortion correction function; and
transmitting the projection image to the image projecting apparatus (30, 130).
